(19) **Europäisches Patentamt**

**European Patent Office**

**Office européen des brevets**

(11) **EP 0 919 526 B1**

(12) **EUROPÄISCHE PATENTSCHRIFT**

(45) Veröffentlichungstag und Bekanntmachung des Hinweises auf die Patenterteilung:
**09.01.2002 Patentblatt 2002/02**

(51) Int Cl.$^7$: **C04B 24/42**

(21) Anmeldenummer: **98118552.3**

(22) Anmeldetag: **01.10.1998**

(54) **Organosiliciumverbindungenhaltige hydrophobierende Pulver enthaltende Baustoffmassen**

Construction materials comprising hydrophobing powders containing organosilicon compounds

Matériaux de construction comprenant des poudres contenant des composés d'organosilice hydrophobiques

(84) Benannte Vertragsstaaten:
**AT BE CH DE ES FI FR GB IT LI NL SE**

(30) Priorität: **27.11.1997 DE 19752659**

(43) Veröffentlichungstag der Anmeldung:
**02.06.1999 Patentblatt 1999/22**

(73) Patentinhaber: **Wacker-Chemie GmbH**
**81737 München (DE)**

(72) Erfinder:
- **Mayer, Hans Dr.**
  **84489 Burghausen (DE)**
- **König-Lumer, Ingeborg**
  **84489 Burghausen (DE)**
- **Hausberger, Albert**
  **83361 Kienberg (DE)**

- **Hager, Rudolf Dr.**
  **84503 Altötting (DE)**

(74) Vertreter: **Fritz, Helmut, Dr. et al**
**Wacker-Chemie GmbH, Zentralabteilung Patente, Marken und Lizenzen,**
**Hanns-Seidel-Platz 4**
**81737 München (DE)**

(56) Entgegenhaltungen:
EP-A- 0 811 584        US-A- 4 231 917
US-A- 4 851 047        US-A- 5 183 710

- PATENT ABSTRACTS OF JAPAN vol. 018, no. 410 (C-1232), 2. August 1994 & JP 06 122539 A (SHIN ETSU CHEM CO LTD), 6. Mai 1994
- PATENT ABSTRACTS OF JAPAN vol. 096, no. 004, 30. April 1996 & JP 07 330411 A (MITSUBISHI CHEM CORP;OTHERS: 02), 19. Dezember 1995

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft Baustoffmassen, die hydrophobierende Organosiliciumverbindung enthaltende Pulver umfassen.

Organosiliciumverbindungen enthaltende in Wasser redispergierbare Pulver sind aus DE-A-19535833 bekannt. Die Pulver basieren auf Vinylacetat-Copolymeren und enthalten auf der Oberfläche neben Dispergiermitteln Anteile auf wasserunlöslichen Trägersubstanzen aufgebrachter Organosiliciumverbindungen als Hydrophobierungsmittel. Dadurch wird die Verblockungsneigung bei unveränderter Redispergierbarkeit der redispergierbaren Pulver verringert. Verblockung verschlechtert die Redispergierbarkeit als auch die Lagerstabilität der redispergierbaren Pulver. Bei Lagerung bei hoher Luftfeuchtigkeit neigen diese redispergierbaren Pulver zur Verklumpung. Diese Pulver hydrophobieren damit versetzte Baustoffmassen nicht.

Organosiliciumverbindungen enthaltende in Wasser nicht redispergierbare Pulver sind bekannt aus GB-A-1217813. Die Pulver werden hergestellt aus Kalk und einer Emulsion von Organopolysiloxanharz. Verwendet werden die dort beschriebenen Kalkpulver als Hydrophobierungsmittel für anorganische Bindemittel enthaltende oder aus solchen Bindemitteln bestehende Massen sowie als Bindemittel in Mörteln und Putzen.

Die Kalkpulver führen leicht zu Verklumpungen und Verdickungen der damit versetzten Massen. Kalk wirkt zudem als Katalysator für reaktive Organosiliciumverbindungen. Aufgrund ihrer hohen Alkalität sind die Kalkpulver nur für hydraulisch abbindende Kalk und/oder Zement enthaltende Massen geeignet oder für Gips. Die hydrophobierende Wirkung ist zu gering.

Es bestand die Aufgabe, Baustoffmassen bereitzustellen, die nicht zur Verklumpung neigende und leicht zu dosierende pulverförmige Hydrophobierungsmittel enthalten.

Gegenstand der Erfindung sind rende Pulver umfassen, welche im wesentlichen enthalten Baustoffmassen, die hydrophobierende Pulver umfassen, welche im wesentlichen enthalten

A) pyrogen hergestellte Kieselsäure oder gefällte Kieselsäure mit einer BET-Oberfläche von mindestens 50 m$^2$/g als Trägermaterial und
B) Bei 10°C flüssige hydrophobierende Komponente, die

B1) Organosiliciumverbindung und gegebenenfalls
B2) Lösungsmittel und/oder
B3) Wasser und Emulgator enthält,

mit der Maßgabe, daß die Pulver 5 bis 80 Gew.-% Organosiliciumverbindung, bezogen auf das Gesamtgewicht der Pulver enthalten,
dadurch gekennzeichnet, daß die Organosiliciumverbindung

(B1) ausgewählt wird aus

(B1.1) $C_1$-$C_{20}$-Alkyl-$C_1$-$C_6$-alkoxysilanen,
(B1.2) Organosiloxanen, die Gruppen aufweisen, welche ausgewählt werden aus Kohlenwasserstoff-, Hydroxyl-, $C_1$-$C_6$-Alkoxy- und Aminoalkygruppen und
(B1.3) Alkalisiliconaten.

Es bestand die Aufgabe, Baustoffmassen bereitzustellen, die nicht zur Verklumpung neigende und leicht zu dosierende pulverförmige Hydrophobierungsmittel enthalten.

Gegenstand der Erfindung sind Baustoffmassen, die hydrophobierende Pulver umfassen, welche im wesentlichen enthalten

A) Kieselsäure als Trägermaterial und
B) Bei 10°C flüssige hydrophobierende Komponente, die

B1) Organosiliciumverbindung und gegebenenfalls
B2) Lösungsmittel und/oder
B3) Wasser und Emulgator enthält,

mit der Maßgabe daß die Pulver 5 bis 80 Gew.-% Organosiliciumverbindung, bezogen auf das Gesamtgewicht der Pulver enthalten.

Die Baustoffmassen erreichen schnell eine -starke Wasserabweisung. Da im Gegensatz zu beispielsweise hydrophobierten redispergierbaren Dispersionspulvern bei den vorliegenden hydrophobierenden Pulvern auf reemulgierbare Bestandteile verzichtet wird, ist die Ausbildung der Wasserabweisung schneller und deutlicher.

Die hydrophobierenden Pulver sind nicht dispergierbar und sind deshalb nicht mit Dispergiermitteln überzogen, welche zur Verklumpung neigen. Die hydrophobierenden Pulver sind rieselfähig und verklumpen auch nach längerer Lagerung in wasserdampfgesättigter Luft nicht.

Vorzugsweise beträgt die Summe aus (A) Kieselsäure und Organosiliciumverbindung, organisches Lösungsmittel, Wasser und Emulgator von der flüssigen hydrophobierenden Komponente (B) mindestens 90, insbesondere mindestens 95 Gew.-% der hydrophobierenden Pulver.

Die als Trägermaterial (A) eingesetzten Kieselsäuresorten sind hochdispers und weisen eine BET-Oberfläche von mindestens 50 $m^2$/g, insbesondere von mindestens 100 $m^2$/g auf.

Vorzugsweise besitzen die

$C_1$-$C_{20}$-Kohlenwasserstoff-$C_1$-$C_6$-alkoxysilane (B1.1) 1 oder 2 gleiche oder verschiedene, gegebenenfalls halogensubstituierte, über SiC-gebundene einwertige $C_1$-$C_{20}$-Kohlenwasserstoffreste und die übrigen Reste sind gleiche oder verschiedene $C_1$-$C_6$-Alkoxyreste.

Beispiele für die $C_1$-$C_{20}$-Kohlenwasserstoffreste, sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest und Dodecylreste, wie der n-Dodecylrest; Cycloalkylreste, wie Cyclopentyl-, Cyclohexyl-, 4-Ethylcyclohexyl-, Cycloheptylreste, Norbornylreste und Methylcyclohexylreste; Alkenylreste, wie der Vinyl-, Allyl, n-5-Hexenyl-, 4-Vinylcyclohexyl- und der 3-Norbornenylrest ; Arylreste, wie der Phenyl-, Biphenylyl-, Naphthyl- und Anthryl- und Phenanthrylrest; Alkarylreste, wie o-, m-, p-Tolylreste, Xylylreste und Ethylphenylreste; Aralkylreste, wie der Benzylrest, der alpha- und der β-Phenylethylrest. Besonders bevorzugt sind die nicht substituierten $C_1$-$C_{12}$-Alkylreste und der Phenylrest.

Beispiele für halogensubstituierte $C_1$-$C_{20}$-Alkylreste sind mit Fluor-, Chlor-, Brom- und Jodatomen substituierte Alkylreste, wie der 3,3,3-Trifluor-n-propylrest, der 2,2,2,2',2',2'-Hexafluorisopropylrest und der Heptafluorisopropylrest.

Besonders bevorzugt sind die nicht substituierten $C_1$-$C_{12}$-Alkylreste und der Phenylrest.

Beispiele für $C_1$-$C_6$-Alkoxyreste sind der Methoxy-, Ethoxy-, n-Propoxy-, Isopropoxy-, n-Butoxy-, iso-Butoxy-, sec.-Butoxy-, tert.-Butoxyrest; Pentyloxyreste, wie der n-Pentyloxyrest und Hexyloxyreste, wie der n-Hexyloxyrest. Die Ethoxyreste sind besonders bevorzugt.

Die Alkoxyreste können mit Halogenatomen substituiert sein, jedoch ist dies nicht bevorzugt.

Vorzugsweise sind die Organosiloxane (B1.2) aus Einheiten der allgemeinen Formel (I)

$$R_v Si(OH)_x (OR^1)_y R^2{}_z O_{\frac{4-v-x-y-z}{2}} \qquad (I),$$

aufgebaut, in der

**R**   einen einwertigen, gegebenenfalls halogensubstituierten, über SiC-gebundenen $C_1$-$C_{20}$-Kohlenwasserstoffrest,
**R$^1$**   ein Wasserstoffatom oder einen einwertigen $C_1$-$C_6$-Alkylrest,
**R2**   einen einwertigen, gegebenenfalls halogensubstituierten, SiC-gebundene Aminoalkylrest mit 1 bis 30 Kohlenstoffatomen,
**v**   die Werte 0, 1, 2 oder 3, durchschnittlich 0,3 bis 2,0,
**x**   die Werte 0 oder 1, durchschnittlich 0,0 bis 1,0,
**y**   die Werte 0, 1, 2 oder 3, durchschnittlich 0,0 bis 1,5 und
**z**   die Werte 0, 1, 2 oder 3, durchschnittlich 0,0 bis 0,8 bedeuten,

mit der Maßgabe, daß die Organosiloxane (B1.2) mindestens eine Einheit der allgemeinen Formel (I) aufweisen, in der die Summe von **x**, **y** und **z** mindestens den Wert 1 beträgt.

Vorzugsweise beträgt die Summe von **v**, **x**, **y** und **z** durchschnittlich 0,01 bis 3,0.

Beispiele für die $C_1$-$C_{20}$-Kohlenwasserstoffreste **R** sind die vorstehend bei den $C_1$-$C_{20}$-Kohlenwasserstoff-$C_1$-$C_6$-alkoxysilanen (B1.1) aufgeführten Beispiele für $C_1$-$C_{20}$-Kohlenwasserstoffreste.

Beispiele für die Reste **OR$^1$** sind die vorstehend für $C_1$-$C_{20}$-Kohlenwasserstoff-$C_1$-$C_6$-alkoxysilane (B1.1) genannten $C_1$-$C_6$-Alkoxyreste.

Bevorzugt handelt es sich bei Rest $R^2$ um einen Rest der allgemeinen Formel (II)

$$R_2^3NR^4-\qquad\qquad\text{(II)},$$

worin

R3 ein Wasserstoffatom oder einwertigen, gegebenenfalls substituierten $C_1$-$C_{10}$-Kohlenwasserstoffrest oder $C_1$-$C_{10}$-Aminokohlenwasserstoffrest und

R4 einen zweiwertigen $C_1$-$C_{15}$-Kohlenwasserstoffrest bedeuten.

Beispiele für Rest $R^3$ sind die für Rest **R** gegebenen Beispiele für Kohlenwasserstoffreste sowie mit Aminogruppen substituierte Kohlenwasserstoffreste, wie Aminoalkylreste, wobei der Aminoethylrest besonders bevorzugt ist.

Vorzugsweise ist an jedes Stickstoffatom in den Resten der allgemeinen Formel (II) mindestens ein Wasserstoffatom gebunden.

Bevorzugt handelt es sich bei Rest $R^4$ um zweiwertige Kohlenwasserstoffreste mit 1 bis 10 Kohlenstoffatomen, besonders bevorzugt 1 bis 4 Kohlenstoffatomen, insbesondere um den n-Propylenrest.

Beispiele für Rest $R^4$ sind der Methylen-, Ethylen-, Propylen-, Butylen-, Cyclohexylen-, Octadecylen-, Phenylen- und Butenylenrest.

Bevorzugte Beispiele für Reste $R^2$ sind

$H_2N(CH_2)_3-$,
$H_2N(CH_2)_2NH(CH_2)_2-$,
$H_2N(CH_2)_2NH(CH_2)_3-$,
$H_2N(CH_2)_2-$,
$H_3CNH(CH_2)_3-$,
$C_2H_5NH(CH_2)_3-$,
$H_3CNH(CH_2)_2-$,
$C_2H_5NH(CH_2)_2-$,
$H_2N(CH_2)_4-$,
$H_2N(CH_2)_5-$,
$H(NHCH_2CH_2)_3-$,
$C_4H_9NH(CH_2)_2NH(CH_2)_2-$,
$cyclo\text{-}C_6H_{11}NH(CH_2)_3-$,
$cyclo\text{-}C_6H_{11}NH(CH_2)_2-$,
$(CH_3)_2N(CH_2)_3-$,
$(CH_3)_2N(CH_2)_2-$,
$(C_2H_5)_2N(CH_2)_3-$ und
$(C_2H_5)_2N(CH_2)_2-$.

Die Beispiele für Alkylreste $R^1$ gelten im vollen Umfang auch für den Rest $R^4$.

Bevorzugte Organosiloxane (B1.2.1) aus Einheiten der vorstehenden allgemeinen Formel (I) sind bei 10°C flüssig. Darin weisen

v einen durchschnittlichen Wert von 0,3 bis 1,5, insbesondere 0,9 bis 1,1,

x einen durchschnittlichen Wert von 0,0 bis 0,2,

y einen durchschnittlichen Wert von 0,4 bis 1,2 und

z den Wert 0 auf.

Die bevorzugten Organosiloxane (B1.2.1) sind insbesondere verzweigt, und weisen mindestens eine Einheit der allgemeinen Formel (I) auf, in der die Summe von **v**, **x**, **y** und **z** die Werte 0 oder 1 beträgt.

Vorzugsweise weisen die Organosiloxane (B1.2.1) mindestens 10 mol-%, insbesondere mindestens 30 mol-% Einheiten der allgemeinen Formel (I) auf, in der die Summe von **x**, **y** und **z** die Werte 0 oder 1 beträgt.

Beispiele für Organosiloxane (B1.2.1) sind solche, die durch Umsetzung von Methyltrichlorsilan und gegebenenfalls einem C1-C8-Alkyltrichlorsilan, oder Phenyltrichlorsilan mit Ethanol in Wasser erhältlich sind, wie die Organopolysiloxane der Summenformeln

$$CH_3Si(OC_2H_5)_{0,8}O_{1,1}$$

$$C_6H_5Si(OC_2H_5)_{0,72}O_{1,14}$$

oder

$$(CH_3)_{0,7} \, (^{iso}Oct)_{0,3} \, Si(OCH_3)_{1,3}O_{0,85} \, .$$

Vorzugsweise besitzen Organosiloxane (B1.2.1) eine Viskosität von 5 mm$^2$/s bis 50000 mm$^2$/s, insbesondere 10 mm$^2$/s bis 5000 mm$^2$/s bei 25°C.

Die ebenfalls bevorzugten Organosiloxane (B1.2.2) weisen die gleichen bevorzugten Bedeutungen von v, x, y und z wie die Organosiloxane (B1.2.1) auf, sind jedoch bei 10°C, vorzugsweise auch bei 30°C fest.

Bei bevorzugten Organosiloxane (B1.2.3) aus Einheiten der vorstehenden allgemeinen Formel (I) weisen

**v**  durchschnittlich 1,6 bis 2,0, insbesondere 1,9 bis 2,0,

**x**  durchschnittlich 0,01 bis 1,0,

**y**  durchschnittlich 0,0 bis 0,2 und

**z**  den Wert 0 auf.

Vorzugsweise weisen die Organosiloxane (B1.2.3) höchstens 5 mol-%, insbesondere höchstens 1 mol-% Einheiten der allgemeinen Formel (I) auf, in der die Summe von **x**, **y** und **z** die Werte 0 oder 1 beträgt. Vorzugsweise sind die Organosiloxane (B1.2.3) Hydroxylendgestoppert.

Vorzugsweise besitzen Organosiloxane (B1.2.3) eine Viskosität von 1 mm$^2$/s bis 50000 mm$^2$/s, insbesondere 10 mm$^2$/s bis 5000 mm$^2$/s bei 25°C.

Bei bevorzugten Organosiloxanen (B1.2.4) aus Einheiten der vorstehenden allgemeinen Formel (I) weisen

**v**  einen durchschnittlichen Wert von 0,3 bis 1,9, insbesondere 0,9 bis 1,8, -

**x**  einen durchschnittlichen Wert von 0,0 bis 0,1,

**y**  einen durchschnittlichen Wert von 0,0 bis 1,0, insbesondere 0,0 bis 0,3 und

**z**  einen durchschnittlichen Wert von 0,05 bis 1,0, insbesondere 0,2 bis 0,8 auf.

Die bevorzugten Organosiloxane (B1.2.4) sind insbesondere verzweigt, und weisen mindestens eine Einheit der allgemeinen Formel (I) auf, in der die Summe von **v**, **x**, **y** und **z** die Werte 0 oder 1 beträgt.

Vorzugsweise weisen die Organosiloxane (B1.2.4) mindestens 5 mol-%, insbesondere mindestens 10 mol-% Einheiten der allgemeinen Formel (I) auf, in der die Summe von x, y und z die Werte 0 oder 1 beträgt.

Vorzugsweise sind die Alkalisiliconate (B1.3) Lithium-, Natrium- oder Kaliumsalze. Vorzugsweise sind die Reste der Alkalisiliconate (B1.3) $C_1$-$C_6$-Alkyl- oder Phenylreste.

Die hydrophobierende Komponente (B) enthält Lösungsmittel (B2), wenn die Organosiliciumverbindung (B1) bei 10°C fest ist. Als Lösungsmittel kommen Wasser und organisches Lösungsmittel in Frage.

Als organisches Lösungsmittel (B2) sind Lösungsmittel oder Lösungsmittelgemische mit einem Siedepunkt bzw. Siedebereich von bis zu 150° C, insbesondere bis zu 120° C bei 0,1 MPa bevorzugt. Beispiele für solche Lösungsmittel sind Alkohole, wie Methanol, Ethanol, n-Propanol, iso-Propanol, n-Amylalkohol, i-Amylalkohol; Ether, wie Dioxan, Tetrahydrofuran, Diethylether, Di-isopropylether, Diethylenglycoldimethylether; chlorierte Kohlenwasserstoffe, wie Dichlormethan, Trichlormethan, Tetrachlormethan, 1,2-Dichlorethan, Trichlorethylen; Kohlenwasserstoffe, wie Pentan, n-Hexan, Hexan-Isomerengemische, Heptan, Oktan, Waschbenzin, Petrolether, Benzol, Toluol, Xylole; Ketone, wie Aceton, Methylethylketon, Di-isopropylketon, Methyl-isobutylketon (MIBK) ; Ester, wie Ethylacetat:, Butylacetat, Propylpropionat, Ethylbutyrat, Ethyl-isobutyrat; oder Gemische dieser Lösungsmittel. Besonders bevorzugt sind die Alkohole und Kohlenwasserstoffe.

Der Anteil des Lösungsmittels (B2) beträgt vorzugsweise höchstens 80 Gew.-%, insbesondere höchstens 60 Gew.-% der bei 10°C flüssigen hydrophobierenden Komponente (B).

Wenn die bei 10°C flüssige hydrophobierende Komponente (B) in den hydrophobierenden Pulvern Wasser und Emulgator (B3) enthält, liegt die Organosiliciumverbindung (B1) in Form einer wässrigen Emulsion vor. An sich bekannte Emulgatoren können eingesetzt werden.

**Als anionische Emulgatoren eignen sich besonders:**

1. Alkylsulfate, besonders solche mit einer Kettenlänge von 8 bis 18 C-Atomen, Alkyl- und Alkarylethersulfate mit 8 bis 18 C-Atomen im hydrophoben Rest und 1 bis 40 Ethylenoxid (EO)-bzw. Propylenoxid(PO)einheiten.

2. Sulfonate, besonders Alkylsulfonate mit 8 bis 18 C-Atomen, Alkylarylsulfonate mit 8 bis 18 C-Atomen, Tauride, Ester und Halbester der Sulfobernsteinsäure mit einwertigen Alkoholen oder Alkylphenolen mit 4 bis 15 C-Atomen; gegebenenfalls können diese Alkohole oder Alkylphenole auch mit 1 bis 40 EO-Einheiten ethoxyliert sein.

3. Alkali- und Ammoniumsalze von Carbonsäuren mit 8 bis 20 C-Atomen im Alkyl-, Aryl-, Alkaryl- oder Aralkylrest.

4. Phosphorsäureteilester und deren Alkali- und Ammoniumsalze, besonders Alkyl- und Alkarylphosphate mit 8 bis 20 C-Atomen im organischen Rest, Alkylether- bzw. Alkaryletherphosphate mit 8 bis 20 C-Atomen im Alkyl- bzw. Alkarylrest und bis 40 EO-Einheiten.

**Als nichtionische Emulgatoren eignen sich besonders:**

5. Polyvinylalkohol, der noch 5 bis 50 %, vorzugsweise 8 bis 20 % Vinylacetateinheiten aufweist, mit einem Polymerisationsgrad von 500 bis 3000.

6. Alkylpolyglycolether, vorzugsweise solche mit 8 bis 40 EO-Einheiten und Alkylresten von 8 bis 20 C-Atomen.

7. Alkylarylpolyglycolether, vorzugsweise solche mit 8 bis 40 EO-Einheiten und 8 bis 20 C-Atomen in den Alkyl- und Arylresten.

8. Ethylenoxid/Propylenoxid(EO/PO)-Blockcopolymere, vorzugsweise solche mit 8 bis 40 EO- bzw. PO-Einheiten.

9. Additionsprodukte von Alkylaminen mit Alkylresten von 8 bis 22 C-Atomen mit Ethylenoxid oder Propylenoxid.

10. Fettsäuren mit 6 bis 24 C-Atomen.

11. Alkylpolyglykoside der allgemeinen Formel $R^*$-O-$Z_O$, worin $R^*$ einen linearen oder verzweigten, gesättigten oder ungesättigten Alkylrest mit im Mittel 8 - 24 C-Atomen und $Z_O$ einen Oligoglykosidrest mit im Mittel o = 1 - 10 Hexose- oder Pentoseeinheiten oder Gemischen davon bedeuten.

12. Naturstoffe und deren Derivate, wie Lecithin, Lanolin, Saponine, Cellulose; Cellulosealkylether und Carboxyalkylcellulosen, deren Alkylgruppen jeweils bis zu 4 Kohlenstoffatome besitzen.

13. Polare Gruppen enthaltende lineare Organo(poly)siloxane, insbesondere solche mit Alkoxygruppen mit bis zu 24 C-Atomen und/oder bis zu 40 EO- und/oder PO-Gruppen.

**Als kationische Emulgatoren eignen sich besonders:**

14. Salze von primären, sekundären und tertiären Fettaminen mit 8 bis 24 C-Atomen mit Essigsäure, Schwefelsäure, Salzsäure und Phosphorsäuren.

15. Quarternäre Alkyl- und Alkylbenzolammoniumsalze, insbesondere solche, deren Alkylgruppe 6 bis 24 C-Atome besitzen, insbesondere die Halogenide, Sulfate, Phosphate und Acetate.

16. Alkylpyridinium-, Alkylimidazolinium- und Alkyloxazoliniumsalze, insbesondere solche, deren Alkylkette bis zu 18 C-Atome besitzt, speziell die Halogenide, Sulfate, Phosphate und Acetate.

**Als Ampholytische Emulgatoren eignen sich besonders:**

17. Langkettig substituierte Aminosäuren, wie N-Alkyl-di-(aminoethyl-)glycin oder N-Alkyl-2-aminopropionsäuresalze.

18. Betaine, wie N-(3-Acylamidopropyl)-N,N-dimethylammoniumsalze mit einem $C_8$-$C_{18}$-Acylrest und Alkyl-imida-zolium-Betaine.

Bevorzugt als Emulgatoren sind nichtionische Emulgatoren, insbesondere die vorstehend unter 6. aufgeführten Alkylpolyglycolether, unter 9. aufgeführten Additionsprodukte von Alkylaminen mit Ethylenoxid oder Propylenoxid und die vorstehend unter 11. aufgeführten Alkylpolyglykoside.

Die Menge der Organosiliciumverbindung (B1) in den wässrigen Emulsionen beträgt vorzugsweise 1 bis 80 Gew.-%, insbesondere 5 bis 75 Gew.-%.

Der Anteil des Emulgators beträgt vorzugsweise 0,1 bis 30 Gew.-%, insbesondere 0,5 bis 5 Gew.-% der bei 10°C flüssigen hydrophobierenden Komponente (B).

Vorzugsweise enthalten die Pulver mindestens 10, insbesondere mindestens 20 Gew.-% und höchstens 70 Gew.-% Organosiliciumverbindung, bezogen auf das Gesamtgewicht der Pulver.

Das hydrophobierende Pulver wird hergestellt, indem die bei 10°C flüssige hydrophobierende Komponente (B) mit Kieselsäure als Trägermaterial vermischt wird.

Die Vermischung kann auf sehr einfache Weise erfolgen, indem das Trägermaterial vorgelegt wird und Komponente (B) zugeben wird und geschüttelt wird.

Das Aufbringen der flüssigen hydrophobierenden Komponente (B) auf das Trägermaterial kann in jedem beliebigen, für Pulvermischungen geeigneten Gerät erfolgen, wobei sich vielfach hohe Scherkräfte negativ auswirken. Beispiele sind kontinuierlich und diskontinuierlich arbeitende Schneckenbandmischer, Doppelspiralmischer, Schaufelmischer, Pflugscharmischer und schnell-und langsamlaufende Paddelmischer sowie Wirbelschneckenmischer und Trogmischer. Auch Mischer mit rotierenden Mischbehältern sind brauchbar, wie z.B. die Rhönradmischer, Taumelmischer, Doppelkonusmischer und V-Mischer. Die Mischung erfolgt im allgemeinen bei Raumtemperatur. In verschiedenen Fällen ist es jedoch vorteilhaft sie bei erhöhter Temperatur durchzuführen. Beispielsweise ist dies vorteilhaft, wenn die Viskosität der flüssigen hydrophobierenden Komponente (B) bei Raumtemperatur für eine gleichmäßige Einarbeitung zu hoch ist.

Im allgemeinen ist es vorteilhaft das Trägermaterial vorzulegen und die flüssige hydrophobierende Komponente (B) zuzudosieren, eventuell sogar aufzusprühen. Die Mischung kann natürlich auch kontinuierlich erfolgen.

Die Baustoffmassen können insbesondere Beschichtungsmassen oder mineralische Baustoffmischungen für die Herstellung mineralischer Bauteile sein.

Die Beschichtungsmassen werden insbesondere für mineralische Untergründe eingesetzt.

Die Beschichtungsmassen können rein lösemittelbasierend sein, wässrig oder in Pulverform vorliegen.

Beschichtungsmassen sind beispielsweise Anstriche, wie Mineralfarben, Kalkfarben, Silikatfarben, Dispersionsfarben, Dispersionskalkfarben, Dispersionssilikatfarben, und Grundierungen; Putze, wie Mineralputze und Silikatputze; hochgefüllte Beschichtungen auf Dispersionsbasis, Streichfüller, Armierungsmassen, Spachtelmassen und Fliesenkleber, sowie Mörtel, wie Fugenmörtel.

Als mineralische Baustoffmischungen werden alle Rohmischungen aufgefaßt, aus denen mineralische Bauteile hergestellt werden können, welche wiederum zur Herstellung von Bauten benötigt werden und Teil der Bauten sind, insbesondere, wenn sie der Bewitterung ausgesetzt sind oder sonstigen wasserabweisenden Schutz benötigen.

Bauteile sind beispielsweise werkseitig hergestellte Ziegel und Betondachsteine, Faserzement- und Gipsplatten sowie sonstige Fertigteile und Dämmstoffteile.

Mineralische Baustoffmischungen können aus Beton, Gips, Kalk, Zement, Tonmineralien, wie Kalksandstein, Porenbeton, Ziegel, sowie aus Faserbaustoffmischungen, deren Fasern aus Naturfasern oder Synthesefasern bestehen.

Geeignete Naturfasern sind Mineralfasern, wie Steinwolle, Quarz- oder Keramikfasern oder Pflanzenfasern, wie Zellulose. Geeignete Synthesefasern sind beispielsweise Glasfasern, Kunststofffasern und Kohlefasern. Besonders bevorzugt ist die Verwendung der Siliconpulver zur Hydrophobierung von zementgebundenen Zellulosefaserbauteilen. Die Zellulosefasern können beispielsweise Jute-, Kokos- oder Hanffasern sein oder aus Papier, Karton oder Altpapier stammen.

Die Baustoffmassen enthalten vorzugsweise die hydrophobierenden Pulver in Mengen von 0,01 bis 80 Gew.-%.

Wenn die Beschichtungsmassen die hydrophobierenden Pulver als hydrophobierende Bindemittel enthalten, werden diese in Mengen von mindestens 1, insbesondere mindestens 2 Gew.-% zugesetzt. Vorzugsweise enthalten die als hydrophobierende Bindemittel eingesetzten Pulver Organosiliciumverbindung, welche ausgewählt wird aus Organosiloxanen (B1.2.1), (B1.2.2) und (B1.2.4), insbesondere aus (B1.1)
$C_1$-$C_{20}$-Alkyl-$C_1$-$C_6$-alkoxysilanen und Organosiloxanen (B1.2.1).

Bei Beschichtungsmassen, die hydrophobierenden Pulver als hydrophobierende Bindemittel enthalten tritt nach dem Auftrag auf das Substrat die Bindemittelwirkung früher ein, als bei Beschichtungsmassen, die als hydrophobierende Bindemittel die gleiche Organosiliciumverbindung in Form einer Lösung in organischem Lösungsmittel, Emulsion, Dispersion oder eines redispergierbaren Pulvers enthält. Beispielsweise sind die mit hydrophobierendem Pulver hergestellten Beschichtungen erheblich schneller scheuerfest.

Bevorzugte Beispiele für Beschichtungsmassen, die hydrophobierende Pulver als hydrophobierende Bindemittel enthalten, enthalten neben hydrophobierendem Pulver organisches Polymer, Füll- und Hilfsstoffe. Beispielsweise handelt es sich dann bei den Beschichtungsmassen um Siliconharzbeschichtungssysteme, wie Siliconharzfarben und Siliconharzputze für deren Herstellung bislang Siliconharzemulsionen oder redispergierbare Siliconharzpulver eingesetzt werden. Letztere können zur Formulierung von pastösen Siliconharzfarben und Siliconharzputzen verwendet werden, oder auch von pulvrigen Siliconharzbeschichtungssystemen. Unter pastösen Beschichtungssystemen versteht man wässrige, streichfertige Beschichtungsmaterialien, zu den pulvrigen Beschichtungssystemen gehören beispielsweise Pulverfarben und Trockenputze. Siliconharzbeschichtungssysteme sind beispielsweise in DE-A-19525068 beschrieben.

Wenn die Baustoffmassen die hydrophobierenden Pulver als Hydrophobierungsmittel enthalten, werden diese in Mengen von mindestens 0,01, insbesondere mindestens 0,1 Gew.-% und vorzugsweise höchstens 10, insbesondere höchstens 1 Gew.-% zugesetzt. Die Baustoffmassen können dann Beschichtungsmassen oder vorzugsweise mineralische Baustoffmischungen sein. Die aus den mineralischen Baustoffmischungen hergestellten Baustoffe weisen hohe Wasserabweisung auf.

Die Beschichtungsmassen können auf allen Substraten aufgebracht werden auf die auch die bisher bekannten Beschichtungssysteme aufgebracht worden sind. So eignen sich die Beschichtungsmassen für mineralische Substrate, Metall, Holz und Kunststoff. Vorzugsweise handelt es sich bei den Substraten um mineralische Substrate, wie beispielsweise Beton, Naturstein, Putze, Kalksandstein, Gips und Faserzement, insbesondere um Beton, Naturstein, Putze und Faserzement. Das Aufbringen der Beschichtungsmassen auf die jeweiligen Substrate kann auf beliebige und bisher bekannte Weise erfolgen, wie beispielsweise durch Streichen, Rollen, Sprühen und Tauchen, wobei Streichen und Rollen bevorzugt ist. Vorzugsweise wird die Beschichtungsmasse auf das jeweilige Substrat bei einer Temperatur von 5 bis 50 °C und dem Druck der umgebenden Atmosphäre aufgebracht und bei denselben Bedingungen trocknen gelassen.

Die Beschichtungsmassen sind auf relativ einfache Art und Weise herstellbar und insbesondere im Vergleich zu Silikatfarben und filmbildenden Dispersionsfarben universell, d.h. für alle mineralischen Untergründe, einsetzbar. Die Beschichtungsmassen hydrophobieren die damit behandelten Oberflächen, d.h. machen sie abweisend für flüssiges Wasser, wie Regenwasser, wobei eine hohe Kohlendioxid- und Wasserdampfdurchlässigkeit der Beschichtung gewährleistet ist.

Des weiteren haben die Beschichtungsmassen den Vorteil, daß sich die damit hergestellten Beschichtungen durch eine hohe Beständigkeit, insbesondere Witterungsbeständigkeit, auszeichnen. Darüberhinaus weisen die Beschichtungen keine bzw. nur eine geringe Verschmutzungsneigung auf. Viele Beschichtungen sind auch plakatabweisend.

Weitere Anwendungen für die vorliegenden Baustoffmassen sind Mittel, die zur Sperrung von aufsteigender Mauerfeuchtigkeit durch Löcher in die Mauer eingebracht werden, oder Mittel zur Sperrung von anderer unerwünschter Wasserwanderung, Mittel zur Wasserabweisung von feinteiligen anorganischen Stoffen, wie Perlit, Vermiculit oder Füllstoffen oder Mittel zum Wasserabweisendmachen von Wärmedämmstoffen.

Bei der Verwendung der hydrophobierenden Pulver in den vorliegenden Baustoffmassen ist die schnell zu Tage tretende Wasserabweisung bemerkenswert. Dadurch, daß bei den hydrophobierenden Pulvern im Gegensatz zu beispielsweise hydrophobierten redispergierbaren Dispersionspulvern auf reemulgierbare Bestandteile verzichtet wird, ist die Ausbildung der Wasserabweisung schneller und deutlicher.

Die Baustoffmassen werden durch Vermischen der üblichen Bestandteile der Massen mit dem hydrophobierenden Pulver hergestellt. Da das hydrophobierende Pulver rieselfähig und frei von Verklumpungen ist, wird sehr leicht eine homogene Mischung mit den üblichen Mischvorrichtungen erzielt. Da die hydrophobierenden Pulver wie Füllstoffe zudosiert werden können, ist deren automatische Dosierung einfach.

In den nachfolgenden Beispielen beziehen sich alle Angaben von Teilen und Prozentsätzen, soweit nichts anders angegeben ist, auf das Gewicht. Sofern nicht anders angegeben, werden die nachfolgenden Beispiele bei einem Druck der umgebenden Atmosphäre, also etwa bei 1000 hPa, und bei Raumtemperatur, also bei etwa 20°C, durchgeführt. Alle in den Beispielen angeführten Viskositätsangaben sollen sich auf eine Temperatur von 25°C beziehen.

Die kapillare Wasseraufnahme ($w_{24}$-Wert) wird gemäß DIN 52617 (<u>D</u>eutsche <u>I</u>ndustrie <u>N</u>orm) geprüft. Dabei wird ein Kalksandsteinprobekörper (Vollstein KS DF) mit den Ausmaßen 11,5 cm x 11,5 cm x 2,5 cm und einer Rohdichte von 2,0 g/cm$^3$ zweimal im Abstand von 24 Stunden mit der jeweiligen Beschichtungsmasse beschichtet. Der Probekörper wird anschließend 24 Stunden bei Raumtemperatur, 72 Stunden im Umlufttrockenschrank bei 50°C und 48 Stunden bei Raumtemperatur gelagert. Dann wird der Probekörper 3 Tage lang jeweils 8 Stunden in fließendem Wasser gewässert, wobei die zu prüfende Fläche auf einem Gitter gelagert wird und die Eintauchtiefe des Probekörpers 1 cm beträgt. Anschließend wird der Probekörper bei 50°C 72 Stunden im Umlufttrockenschrank und dann 72 Stunden bei Raumtemperatur getrocknet und dann gewogen. Der Probekörper wird dann mit der beschichteten Seite auf einen, in einer Wanne liegenden, mit Wasser gesättigten Weichschaumstoff gelegt. Durch das Eigengewicht des Probekörpers wird soviel Wasser aus dem Schaumstoff gedrückt, daß der Stein stets mit Wasser in Kontakt ist und saugen kann. Der Schaumstoff muß dabei während der gesamten Prüfzeit wassergesättigt gehalten werden. Nach 24 Stunden Schwammlagerung wird der Stein herausgenommen und gewogen. Der $w_{24}$-Wert ergibt sich bei einer Fläche von (11,5 x 11,5) cm$^2$ aus folgender Formel:

$$w_{24}\text{-Wert} = \frac{\text{Aufgenommene Wassermenge/Fläche in kg/m}^2}{(24 \text{ Stunden})^{1/2}}$$

Die Bestimmung der Wasserdampfdurchlässigkeit (WDDU, sd-Wert) erfolgt nach DIN 52615. Dabei wird eine Polyethylenfritte im Abstand von 24 Stunden zweimal mit der jeweiligen Beschichtungsmasse beschichtet (Naßschichtdicke: ca. 400 g/m$^2$). Anschließend erfolgt eine 14-tägige Lagerung bei 23°C und 50 % relativer Luftfeuchtigkeit. Dann wird die beschichtete Fritte auf eine Polyethylendose mit einem Volumen von 500 ml, die mit 200 g einer gesättigten Ammoniumdihydrogenphosphatlösung befüllt ist, dampfdicht aufgebracht. Aus dem Ausgangsgewicht und der Gewichtsabnahme nach 24, 48 und 72 stündiger Lagerung bei 23 °C und 50 % relativer Luftfeuchtigkeit wird die durchschnittliche Gewichtsabnahme pro 24 Stunden berechnet. Der für die Wasserdampfdurchlässigkeit (WDDU) charakteristische sd-Wert ergibt sich dann nach folgender Formel:

$$\text{sd-Wert} = \frac{\text{Konstante}}{\text{Gewichtsabnahme in g/m}^2 \text{ Meßfläche und 24 Stunden}}$$

Zur Bestimmung der Kreidung wird ein Pappkarton mit der jeweiligen Beschichtungsmasse beschichtet (ca. 200 µm Naßschichtdicke). Nach einer Woche Lagerung bei Raumtemperatur wird die Beschichtung mit einem Wassertropfen versetzt. Der Wassertropfen wird anschließend durch Reiben mit dem Finger (20 mal) auf der Beschichtung verteilt. Dann läßt man das Wasser vom beschichteten Karton ablaufen und beurteilt visuell die Trübung des abgelaufenen Wassers.

Beurteilung:    klares Wasser bedeutet keine Kreidung leicht trübes Wasser bedeutet geringe Kreidung milchig trübes Wasser bedeutet starke Kreidung

Die Scheuerbeständigkeit wird nach DIN 53778 geprüft. Dabei wird die jeweilige Beschichtung mittels eines Filmziehgeräts auf eine Leneta® -Folie in der Weise aufgebracht, daß nach 28-tägiger Lagerung bei 23°C und 50 % relativer Luftfeuchtigkeit eine Trockenfilmschichtdicke von ca. 100 µm resultiert. Anschließend wird die getrocknete Beschichtung in einer Scheuereinrichtung (Scheuerprüfgerät nach Gardner, Modell M 105-A) unter definierten Bedingungen mit einer Scheuerbürste naß gescheuert. Es wird dabei die Anzahl der Scheuercyclen bestimmt, bis der Untergrund, d.h. die Folie, klar erkennbar freigelegt ist.

**Herstellung der hydrophobierenden Pulver:**

In einer gewöhnlichen Küchenmaschine wurden 100 g des Trägermaterials vorgelegt und die Flüssigkeit innerhalb von ca. 5 Minuten bei Raumtemperatur zugetropft.
Rührgeschwindigkeit: Stufe 1. Nach 5 Minuten Nachrühren wurde die pulverförmige Mischung abgefüllt.
Bemerkenswert ist, daß die hydrophobierenden Pulver auch nach 6 wöchiger Lagerung im Exsiccator bei 100 % Luftfeuchtigkeit noch sehr gut rieselfähig bleiben.

**Folgende hydrophobierenden Pulver wurden hergestellt:**

I. Bei 10°C flüssige hydrophobierende Komponente (B) ist flüssige Organosiliciumverbindung (B1) oder flüssige Gemische aus Organosiliciumverbindungen

Siliconpulver Ia

Trägermaterial: 100 g Kieselsäure I
Komponente (B): 100 g Gemisch aus i-Octyltriethoxysilan und Siloxan $\alpha$ im Verhältnis 20 : 80 Gew.-%.

Siliconpulver Ib

Trägermaterial: 100 g Kieselsäure I
Komponente (B): 100 g i-Octyltriethoxysilan

Siliconpulver Ic

Trägermaterial: 100 g Kieselsäure I
Komponente (B): 100 g Siloxan $\alpha$

Siliconpulver Id

Trägermaterial: 100 g Kieselsäure I
Komponente (B): 100 g Gemisch aus Siloxan $\beta$ und Siloxan $\gamma$ im Verhältnis 50 : 50 Gew.-%

Siliconpulver Ie

Trägermaterial: 100 g Kieselsäure I
Komponente (B): 100 g Gemisch aus Siloxan $\delta$, Siloxan $\alpha$, i-Octyltriethoxysilan im Verhältnis 68 : 22 : 10 Gew.-%

Siliconpulver If

Trägermaterial: 100 g Kieselsäure I
Komponente (B): 100 g Siloxan $\gamma$

Siliconpulver Ig

Trägermaterial: 100 g Kieselsäure I
Komponente (B): 100 g Siloxan $\delta$

Siliconpulver Ih

Trägermaterial: 100 g Kieselsäure III
Komponente (B): 100 g Siloxan $\phi$

II. Bei 10°C flüssige hydrophobierende Komponente (B) enthält Wasser und gegebenenfalls Emulgator

Siliconpulver IIa

Trägermaterial: 100 g Kieselsäure II
Komponente (B): 100 g Kaliummethylsiliconat, 42 %ig in Wasser

Siliconpulver IIb

Trägermaterial: 100 g Kieselsäure II
Komponente (B): 100 g einer Emulsion, bei der 67,6 g hergestellt werden durch Vermischen von 1,6 g eines Umsetzungsproduktes aus Stearylamin und Ethylenoxid mit einer Alkalizahl von 48 bis 51 mg KOH/g; 1,6 g eines Isotridecylalkoholglykolethers mit 10 Ethylenoxideinheiten,

80 %ig in Wasser; 34 g eines Kondensationsprodukts aus eines in den endständigen Einheiten je eine Si-gebundene Hydroxylgruppe aufweisenden α,ω-Dihydroxymethylpolysiloxans; N(-2-Aminoethyl)-3-aminopropyltrimethoxysilan in Gegenwart von KOH mit einer Aminzahl von etwa 0,3, einer Viskosität von etwa 1500 mm$^2$/s bei 25 °C und einem Restmethoxgehalt von weniger als 5 Mol.-%, bezogen auf die anfangs im N(-2-Aminoethyl)-3-aminopropyltrimethoxysilan vorhandenen Methoxygruppen, und 30,4 g Wasser.

Siliconpulver IIc

Trägermaterial: 100 g Kieselsäure II
Komponente (B): 100 g Emulsion aus 50 g Gemisch aus Siloxan δ, Siloxan α, i-Octyltriethoxysilan im Gewichtsverhältnis 68 : 22 : 10, 2.0 g Polyvinylalkohol mit 20 % Vinylacetateinheiten und einem Polymerisationsgrad von 2000, und 48 g Wasser.

Siliconpulver IId

Trägermaterial: 100 g Kieselsäure II
Komponente (B): 100 g Emulsion hergestellt durch Vermischen von 1,6 g eines Umsetzungsproduktes aus Stearylamin und Ethylenoxid mit einer Alkalizahl von 48 bis 51 mg KOH/g; 1,6 g eines Isotridecylalkoholglykolethers mit 10 Ethylenoxideinheiten, 80 %ig in Wasser; 34 g eines Kondensationsprodukts aus eines in den endständigen Einheiten je eine Si-gebundene Hydroxylgruppe aufweisenden α,ω-Dihydroxymethylpolysiloxans; 50 g i-Octyltriethoxysilans und 46,8 g Wasser.

III. Bei 10°C flüssige hydrophobierende Komponente (B) enthält organisches Lösemittel

Siliconpulver IIIa

Trägermaterial: 100 g Kieselsäure II
Komponente (B): 100 g einer 50 %igen Lösung von Siloxan ε in Benzin

Siliconpulver IIIb

Trägermaterial: 100 g Kieselsäure II
Komponente (B): 100 g einer 50 %igen Lösung von Siloxan α in Benzin

Siliconpulver IIIc

Trägermaterial: 100 g Kieselsäure II
Komponente (B): 100 g einer 50 %igen Lösung von i-Octyl triethoxysilan in Benzin

Dabei werden die nachfolgend näher beschriebenen Bestandteile eingesetzt:

Kieselsäure I
Fällungskieselsäure mit einer Oberfläche nach BET von 170 m$^2$/g, mittlere Größe der Agglomerate 15 μm, 98 % SiO$_2$.

Kieselsäure II
Fällungskieselsäure mit einer Oberfläche nach BET von 190 m$^2$/g, mittlere Größe der Agglomerate 100 μm, 98 % SiO$_2$.

Kieselsäure III
Fällungskieselsäure mit einer Oberfläche nach BET von 450 m$^2$/g, mittlere Größe der Agglomerate 50 μm, 98,5 % SiO$_2$.

Siloxan α

Organopolysiloxan der Formel $CH_3Si(OC_2H_5)_{0,8}O_{1,1}$ mit einem durchschnittlichen Molekulargewicht von etwa 600 g/Mol und mit einer Viskosität von 20 $mm^2$/s.

Siloxan β

Methylsiliconharz mit ca. 20 Mol-%. Dimethyl-Si-Einheiten, Molekulargewicht ca. 5000, Ethoxy-Si-Gehalt ca. 10 Mol-%, hochviskose Flüssigkeit von 80000 mPas.

Siloxan γ

In den endständigen Einheiten je eine Si-gebundene Eydroxylgruppe aufweisendes Dimethylpolysiloxan mit einem durchschnittlichen Molekulargewicht von etwa 4000 g/Mol.

Siloxan δ

Methylsiliconharz mit ca. 10 Mol-% Dimethylsiloxan-Einheiten, Molekulargewicht ca. 5000, Ethoxy-Si-Gehalt ca. 6 Mol-%, hochviskose Flüssigkeit ca. 100000 mPas.

Siloxan ε

Methylsiliconharz mit ca. 3 Mol-% Dimethyl-Si-Einheiten, Molekulargewicht ca. 5000, Ethoxy-Si-Gehalt ca. 4 Mol-%, pulverförmiges Festharz mit Erweichungspunkt ca. 50 °C.

Siloxan φ

Herstellung:

In einem mit Rührer, Tropftrichter und Rückflußkühler ausgestatteten 11-Dreihalskolben werden unter Rühren zu einem Gemisch aus 0,2 g KOH in 4 g Methanol und 500 g eines in den endständigen Einheiten je eine Si-gebundene Hydroxylgruppe aufweisenden Dimethylpolysiloxans mit einem durchschnittlichen Molekulargewicht von etwa 4000 g/Mol 150 g N-(2-Aminoethyl)-3-aminopropyltrimethoxysilan gegeben und das so erhaltene Gemisch 6 Stunden zum Sieden unter Rückfluß erwärmt; dann wird auf 30 °C gekühlt und mit 2,5 ml 10 %-iger Salzsäure vermischt. Durch Erwärmen auf bis zu 140 °C wird schließlich das Methanol abdestilliert und das so erhaltene Organopolysiloxan von KCl durch Filtrieren befreit. Das Organopolysiloxan enthält 2,9 % basischen Stickstoff, bezogen auf sein Gewicht. 40 g des vorstehenden Organopolysiloxans mit basischem Stickstoff werden mit 160 g i-Octyltriethoxysilan und 5 g Propionsäure vermischt und 2 Stunden bei 120 °C erwärmt, wobei eine leicht gelbliche klare Mischung entsteht, die sich spontan mit Wasser homogen vermischen läßt.

**Herstellung von pastösen Siliconharzfarben**

**Beispiel 1**

Eine pastöse Siliconharzfarbe A wird durch Vermischen der nachfolgenden Einsatzstoffe in der genannten Reihenfolge mit Hilfe eines Labordissolvers hergestellt:

341 Teile Wasser
1 Teil Pigmentverteiler (käuflich erhältlich unter "Pigmentverteiler A" bei der BASF AG, Ludwigshafen)
2 Teile Fungizid (käuflich erhältlich unter "Parmetol® DF 19" bei Schülke & Mayr, D-Norderstedt)
5 Teile Celluloseverdicker (käuflich erhältlich unter "Tylose® H 6000 xp", Hoechst AG, Frankfurt)
120 Teile Titandioxid
275 Teile Calciumcarbonat
60 Teile Talkum
100 Teile Siliconpulver I a
1 Teil 25 %ige wässrige Ammoniaklösung und
95 Teile Polymerdispersion (käuflich erhältlich unter "Acronal®290 D" bei der BASF AG, Ludwigshafen)

Weitere pastöse Siliconharzfarben B, C, D und E werden analog der Siliconharzfarbe A hergestellt, jedoch mit der Abänderung, daß anstelle von 100 Teilen Siliconpulver I a jeweils 100 Teile Siliconpulver I c, I d, I e oder I g eingesetzt werden.
Die Siliconharzfarben werden anschließend hinsichtlich ihrer kapillaren Wasseraufnahme (w24-Wert), ihrer Wasserdampfdurchlässigkeit (WDDU, sd-Wert), ihres Kreidungs-, Scheuer- und ihres Bewitterungsverhaltens untersucht. Die Ergebnisse finden sich in Tabelle 1.

Wie in Beispiel 1 beschrieben wird eine pastöse nicht erfindungsgemäße Siliconharzfarbe V analog der Siliconharzfarbe A hergestellt, jedoch mit der Abänderung, daß anstelle von 100 Teilen Siliconpulver Ia 100 Teile Siliconemulsion EM und anstelle von 275 Teilen Calciumcarbonat 325 Teile Calciumcarbonat eingesetzt werden. Siliconemulsion EM enthält 50 Gew.-Teile eines Gemisches aus i-Octyltriethoxysilan und Siloxan $\alpha$ im Gewichtsverhältnis 20 : 80.

Tabelle 1:

| Silicon-harzfarbe | Silicon-pulver | W24-Wert [kg/m²h$^{0,5}$] | WDDU, sd-Wert [m] | Kreidung | Scheuerwert, 4 Tage Lagerung | Scheuerwert, 28 Tage Lagerung | Bewitterung a) |
|---|---|---|---|---|---|---|---|
| A | I a | 0,09 | 0,02 | Gering | 1500 | >10000 | Keine Risse |
| B | I c | 0,10 | 0,02 | Gering | 1600 | | Keine Risse |
| C | I d | 0,05 | 0,08 | Gering | 1000 | | Keine Risse |
| D | I e | 0,06 | 0,09 | Gering | 2000 | | Keine Risse |
| E | I g | 0,07 | 0,09 | Gering | 2200 | | Keine Risse |
| V | - | 0,07 | 0,05 | Gering | 400 | >10000 | Keine Risse |

a)

Kurzbewitterung: 1000 Stunden Q-UV-B

EP 0 919 526 B1

Bei dem Vergleich der Siliconharzfarben A und V ergaben sich folgende Feststellungen:

1. Mit dem Siliconpulver Ia kann bei gleichem Wirkstoff und bei gleicher Wirkstoffmenge eine qualitativ hochwertige Siliconharzfarbe hergestellt werden, wie es sonst nur mit Siliconharzemulsionen beschrieben ist. Qualitativ hochwertig wird beschrieben durch die Eigenschaften W-Wert (kleiner 0,1), sd-Wert (kleiner 0,1), geringe Kreidung, relative hohe Scheuerwerte bei Kurzscheuerung von 4 Tagen, sehr hohe Scheuerwerte nach 28 Tagen Lagerung wie DIN, Bewitterung (keine Risse).
2. Im Vergleich zur Emulsion EM in der Siliconharzfarbenrezeptur aus Beispiel 1 weist die Verwendung von Siliconpulver Ia frühere Scheuerbeständigkeit auf.

**Vergleichsbeispiel 1**

Pastöse Siliconharzfarben werden entsprechend der Vorgehensweise in Beispiel 1 hergestellt, jedoch mit der Abänderung, daß anstelle von 100 Teilen Siliconpulver I a in einem

1. Versuch 100 Teile Siliconpulver I b (Siliconharzfarbe V1F) und in einem
2. Versuch 100 Teile Siliconpulver I f (Siliconharzfarbe V1G) eingesetzt werden.

Die so erhaltenen Siliconharzfarben werden anschließend wie in Beispiel 1 untersucht. Die Ergebnisse finden sich in Tabelle 2.

Tabelle 2:

| Silicon-harzfarbe | Silicon-pulver | W24-Wert $[kg/m^2 h^{0,5}]$ | WDDU, sd-Wert $[m]$ | Kreidung | Scheuerwert, 4 Tage Lagerung | Bewitterung a) |
|---|---|---|---|---|---|---|
| V1F | I b | 0,07 | 0,08 | Sehr stark | 100 | Abgeblättert |
| V1G | I f | 0,06 | 0,08 | Sehr stark | 120 | Abgeblättert |

Das Vergleichsbeispiel 1 zeigt, daß reine Silanpulver und reine Polydimethylsiloxan-Pulver gut hydrophobieren, aber schlechtes Bindevermögen besitzen.

**Beispiel 2**

Eine pastöse Siliconharzfarbe H wird entsprechend der in Beispiel 1 beschriebenen Arbeitsweise hergestellt, jedoch mit der Abänderung, daß anstelle von 100 Teilen Siliconpulver I a, 200 Teile Siliconpulver II c eingesetzt werden, dafür nur 225 Teile Calciumcarbonat und 291 Teile Wasser.

Die erhaltene Siliconharzfarbe H wird anschließend wie in Beispiel 1 beschrieben untersucht. Die Ergebnisse finden sich in Tabelle 3.

**Beispiel 3**

Eine pastöse Siliconharzfarbe J wird entsprechend der in Beispiel 1 beschriebenen Arbeitsweise hergestellt, jedoch mit der Abänderung, daß anstelle von 100 Teilen Siliconpulver I a, 200 Teile Siliconpulver III b eingesetzt werden, dafür nur 225 Teile Calciumcarbonat und 291 Teile Wasser.

Die erhaltene Siliconharzfarbe J wird anschließend wie in Beispiel 1 beschrieben untersucht. Die Ergebnisse finden sich in Tabelle 3.

Tabelle 3:

| Siliconharzfarbe | Siliconpulver | W24-Wert [kg/m²h$^{0,5}$] | WDDU, sd-Wert [m] | Kreidung | Scheuerwert, 4 Tage Lagerung | Bewitterung a) |
|---|---|---|---|---|---|---|
| H | II c | 0,08 | 0,09 | Gering | 1500 | Keine Risse |
| J | III b | 0,07 | 0,08 | Gering | 1700 | Keine Risse |

a) Kurzbewitterung: 1000 Stunden Q-UV-B

**Herstellung einer Siliconharzpulverfarbe**

**Beispiel 4**

Eine Siliconharzpulverfarbe K wird durch intensives Vermischen der nachfolgenden Einsatzstoffe in der genannten Reihenfolge hergestellt.

150 Teile Dispersionspulver (käuflich erhältlich unter "Vinnapas Dispersionspulver RI 551 Z", Wacker-Chemie GmbH, Burghausen)
250 Teile Siliconpulver I c
200 Teile Titandioxid
1 Teil Celluloseverdicker (käuflich erhältlich unter "Tylose® H 6000 xp", Hoechst AG, Frankfurt)
25 Teile Aluminiumsilicat
5 Teile Emulgator (käuflich erhältlich unter "Polyox® WSR 205", Union-Carbid, Düsseldorf)
15 Teile Hexandiol und
354 Teile Calciumcarbonat

Diese Mischung wird dann mit Hilfe eines Labordissolvers in 500 Teilen Wasser dispergiert. Die erhaltene Farbe wird anschließend hinsichtlich ihrer kapillaren Wasseraufnahme und ihrer Scheuerbeständigkeit untersucht. Die Ergebnisse finden sich in Tabelle 4.

Tabelle 4:

| Pulverfarbe | Siliconpulver | W24-Wert [kg/m²h$^{0,5}$] | Scheuerwert, 4 Tage Lagerung |
|---|---|---|---|
| K | I c | 0,09 | 1.400 |
| V2 | III c | 0,09 | 100 |

**Vergleichsbeispiel 2**

Eine Pulverfarbe V2 wird entsprechend der in Beispiel 4 beschriebenen Arbeitsweise hergestellt, jedoch mit der Abänderung, daß anstelle von 150 Teilen des Siliconpulvers I c, 150 Teile des Siliconpulvers III c eingesetzt werden. Die Farbe wird anschließend wie in Beispiel 4 beschrieben untersucht. Die Ergebnisse finden sich in Tabelle 4.

**Herstellung eines Siliconharzputzes**

**Beispiel 5**

Ein Siliconharzputz wird durch intensives Vermischen der nachfolgenden Einsatzstoffe in der genannten Reihenfolge hergestellt:

129 Teile Wasser
25 Teile Celluloseverdicker (käuflich erhältlich unter "Tylose® H 6000 xp", Hoechst AG, Frankfurt)
2 Teile Fungizid (käuflich erhältlich unter "Parmetol® DF 19" bei Schülke & Mayr, D-Norderstedt)
2 Teile Dispergierhilfsmittel (käuflich erhältlich unter "Dispex® N 40", Krahn-Chemie GmbH, Hamburg)
70 Teile Polymerdispersion (käuflich erhältlich unter "Acronal® S 716" bei der BASF AG, Ludwigshafen)
2 Teile Verfilmungshilfsmittel (käuflich erhältlich unter "Texanol®" bei der Krahn-Chemie GmbH, Hamburg)
50 Teile Siliconpulver I a
20 Teile Titandioxid
698 Teile Calciumcarbonat und
2 Teile 25 %ige Natronlauge

Aus dem so erhaltenen Siliconharzputz werden anschließend Prüfkörper (Scheiben mit einem Durchmesser von 9 cm und einer Dicke von 6 mm) hergestellt und die Wasseraufnahme bestimmt. Zur UV-Bewitterung wird der Putz auf Faserzementplatten aufgebracht. Die Wasseraufnahme des Putzes nach 24 Stunden Wasserlagerung beträgt 4 Gew.-%. Der Putz ist nach 1000 Stunden Q-UV-B-Kurzbewitterung absolut rißfrei, nicht vergilbt und zeigt gegenüber Wasser einen hervorragenden Abperleffekt.

**Hydrophobierung von Fugenmörtel**

**Beispiel 6**

Vom Hersteller (Fa. Dyckerhoff, D-Wiesbaden) überlassener Fugenmörtel ohne Hydrophobierungszusatz (Fugenmörtel L) wurde mit 0,5 % Siliconpulver I b als Hydrophobierungsmittel vermengt (ergibt Fugenmörtel M). Anschließend wurden beide Fugenmörtel L und M 14 d/50 °C gelagert, danach mit Wasser angeteigt und Rundproben hergestellt, die 14 d im Klimaraum (23°C, 50% rel. LF) gelagert wurden. Anschließend Bestimmung der kapillaren Wasseraufnahme. Die Ergebnisse sind in Tabelle 5 zusammengefaßt.

Tabelle 5

| Fugenmörtel | Hydrophobierungsmittel | W24-Wert [kg/m$^2$h$^{0,5}$] |
|:---:|:---:|:---:|
| L | Ohne | 1,55 |
| M | Siliconpulver I b | 0,09 |

**Vergleichsbeispiel 3**

In Abänderung zu Beispiel 6 wurde der Fugenmörtel ohne Hydrophobierungszusatz (Fugenmörtel L) mit 0,5 % Pulver (gemäß GB-A-1217813 aus 30 Gewichtsteilen Siloxan $\alpha$, 5 Gewichtsteilen Wasser, 2 Gewichtsteilen eines Polyvinylalkohols mit 20 % Vinylacetateinheiten und einem Polymerisationsgrad von 2000 und 63 Gewichtsteilen gebranntem Kalk (CaO) hergestellt) vermengt (ergibt Fugenmörtel V3). Der Fugenmörtel wird anschließend wie in Beispiel 6 untersucht. Das Ergebnis findet sich in Tabelle 6.

Tabelle 6

| Fugenmörtel | Hydrophobierungsmittel | W24-Wert [kg/m$^2$h$^{0,5}$] |
|---|---|---|
| V3 | Kalkpulver | 1,14 |

Ergebnis: Das erfindungsgemäße Siliconpulver I b weist eine bedeutend höher wasserabweisende Wirkung auf als Kalkpulver.

**Hydrophobierung von Betonmassen**

**Beispiel 7**

Die Betonmassen N werden wie folgt hergestellt: 1350 Teile Normensand wird mit 450 Teilen Zement und 225 Teilen Wasser vermischt. Von der so hergestellten Masse werden Rundproben hergestellt und 14 Tage bei 23 °C und 50 % rel. LF ausgehärtet und dann die Wasseraufnahme gemäß ZTV-SIB (28 Tage Druckwasserlagerung) durchgeführt. Die Wasseraufnahme der so hergestellten Rundproben N beträgt 6 % bezogen auf Gesamtgewicht der Rundprobe. In Abänderung der Herstellung der Betonmasse N wurden 0,4 % Siliconpulver I b (ergibt Betonmasse O) bzw. 0,4 % Siliconpulver I h (ergibt Betonmasse P) bezogen auf das Gewicht von Sand und Zement eingesetzt und die Wasseraufnahme bestimmt. In allen Fällen wurde die Aushärtung des Betones nicht behindert. Die Ergebnisse sind in Tabelle 7 zusammengefaßt.

Tabelle 7

| Betonmasse | Hydrophobierungsmittel | Wasseraufnahme [%] |
|---|---|---|
| N | Keines | 6 |
| O | Siliconpulver I b | 2,3 |
| P | Siliconpulver I h | 2,1 |

**Hydrophobierung von Fliesenkleber**

**Beispiel 8**

Eine pulverförmige Fliesenklebermischung Q wird durch Vermischen der nachfolgenden Einsatzstoffe in der genannten Reihenfolge in einer Küchenmaschine (Rührgeschwindigkeit: langsam) hergestellt:

350 g Portlandzement PZ 35 F
120 g Quarzsand F 32 (Fa. Quarzwerke Frechen)
476 g Quarzsand Nr. 12 (Fa. Amberger Kaolinwerke)
50 g RE 545 Z der Fa. Wacker-Chemie GmbH (Redispergierbares Dispersionspulver auf Basis eines Vinylacetat/ Ethylen-Copolymeren im Mengenverhältnis 5 : 98).
4 g Methylhydroxyethylcelluloseether (MHEC).

Anschließend wird mit 500 g Wasser versetzt und weiter gerührt. Von einem hergestellten Probekörper wird nach 2 Wochen Lagerung bei 23 °C/50 % rel. LF die Wasseraufnahme bestimmt. Der w24-Wert beträgt 0,87 kg/m$^2$h$^{0,5}$. In Abänderung der Herstellung der Fliesenklebermischung Q werden zusätzlich 5 g Siliconpulver I b zugesetzt, dann mit 500 g Wasser versetzt und weiter gerührt. Stellt man dann einen Probekörper her und bestimmt die Wasseraufnahme, so findet man einen w24-Wert von 0,15 kg/m$^2$h$^{0,5}$.

**Hydrophobierung eines Pulversilikatputzes**

**Beispiel 9**

720 g eines käuflichen Silikattrockenputzes wurden mit 15 g Siliconpulver I h vermischt, anschließend mit 280 g Wasser versetzt. Der aus der Mischung erhaltene Probekörper wurde 14 Tage bei 23 °C und 50 % rel. LF ausgehärtet, anschließend die Wasseraufnahme bestimmt. Der w24-Wert betrug 0,12 kg/m$^2$h$^{0,5}$. Die Probe ohne Siliconpulver I h wies einen w24-Wert von 1,27 auf.

**Hydrophobierung einer Dispersionssilikatfarbe**

**Beispiel 10**

Eine käufliche nicht hydrophobierte Dispersionssilikatfarbe mit w24-Wert von 1,30 kg/m$^2$h$^{0,5}$ wird mit 1 % Siliconpulver II b versetzt. Der anschließend bestimmte w24-Wert betrug 0,16 kg/m$^2$h$^{0,5}$.

**Patentansprüche**

1. Baustoffmassen, die hydrophobierende Pulver umfassen, welche im wesentlichen enthalten

   A) pyrogen hergestellte Kieselsäure oder gefällte Kieselsäure mit einer BET-Oberfläche von mindestens 50 m$^2$/g als Trägermaterial und
   B) Bei 10°C flüssige hydrophobierende Komponente, die

      B1) Organosiliciumverbindung und gegebenenfalls
      B2) Lösungsmittel und/oder
      B3) Wasser und Emulgator enthält,

   mit der Maßgabe, daß die Pulver 5 bis 80 Gew.-% Organosiliciumverbindung, bezogen auf das Gesamtgewicht der Pulver enthalten,

   **dadurch gekennzeichnet, daß** die Organosiliciumverbindung (B1) ausgewählt wird aus

   (B1.1) $C_1$-$C_{20}$-Alkyl-$C_1$-$C_6$-alkoxysilanen,
   (B1.2) Organosiloxanen, die Gruppen aufweisen, welche ausgewählt werden aus Kohlenwasserstoff-, Hydroxyl-, $C_1$-$C_6$-Alkoxy- und Aminoalkygruppen und
   (B1.3) Alkalisiliconaten.

2. Baustoffmassen nach Anspruch 1, wobei die Organosiloxane (B1.2) aus Einheiten der allgemeinen Formel (I)

$$R_v Si(OH)_x (OR^1)_y R^2{}_z O_{\frac{4-v-x-y-z}{2}} \qquad (I),$$

   aufgebaut sind, in der

   **R**    einen einwertigen, gegebenenfalls halogensubstituierten, über SiC-gebundenen $C_1$-$C_{20}$-Kohlenwasserstoffrest,

   **R$^1$**    ein Wasserstoffatom oder einen einwertigen $C_1$-$C_6$-Alkylrest,

   **R2**    einen einwertigen, gegebenenfalls halogensubstituierten, SiC-gebundene Aminoalkylrest mit 1 bis 30 Kohlenstoffatomen,

   **v**    die Werte 0, 1, 2 oder 3, durchschnittlich 0,3 bis 2,0,
   **x**    die Werte 0 oder 1, durchschnittlich 0,0 bis 1,0,
   **y**    die Werte 0, 1, 2 oder 3, durchschnittlich 0,0 bis 1,5 und
   **z**    die Werte 0, 1, 2 oder 3, durchschnittlich 0,0 bis 0,8 bedeuten,

   mit der Maßgabe, daß die Organosiloxane (B1.2) mindestens eine Einheit der allgemeinen Formel (I) aufweisen, in der die Summe von **x**, **y** und **z** mindestens den Wert 1 beträgt.

3. Baustoffmassen nach Anspruch 2, die als Organosiloxane (B1.2) bei 10°C flüssige Organosiloxane (B1.2.1) enthalten, wobei

   **v**    einen durchschnittlichen Wert von 0,3 bis 1,5,

**x**   einen durchschnittlichen Wert von 0,0 bis 0,2,
**y**   einen durchschnittlichen Wert von 0,4 bis 1,2 und
**z**   den Wert 0 aufweisen.

**4.**   Baustoffmassen nach Anspruch 2, die als Organosiloxane (B1.2) bei 10°C feste Organosiloxane (B1.2.2) enthalten, wobei **v**, **x**, **y** und **z** die in Anspruch 5 angegebenen Bedeutungen aufweisen.

**5.**   Baustoffmassen nach Anspruch 2, die als Organosiloxane (B1.2) Organosiloxane (B1.2.3) enthalten, bei denen

**v**   durchschnittlich 1,6 bis 2,0, insbesondere 1,9 bis 2,0,
**x**   durchschnittlich 0,01 bis 1,0,
**y**   durchschnittlich 0,0 bis 0,2 und
**z**   den Wert 0 aufweisen.

**6.**   Baustoffmassen nach Anspruch 2, die als Organosiloxane (B1.2) Organosiloxane (B1.2.4) enthalten, bei denen

**v**   einen durchschnittlichen Wert von 0,3 bis 1,9, insbesondere 0,9 bis 1,8,
**x**   einen durchschnittlichen Wert von 0,0 bis 0,1,
**y**   einen durchschnittlichen Wert von 0,0 bis 1,0, insbesondere 0,0 bis 0,3 und
**z**   einen durchschnittlichen Wert von 0,05 bis 1,0, insbesondere 0,2 bis 0,8 aufweisen.

**7.**   Baustoffmassen nach Anspruch 1 bis 6, wobei die Baustoffmassen Beschichtungsmassen oder mineralische Baustoffmischungen für die Herstellung mineralischer Bauteile sind.

**Claims**

**1.**   Building compositions which comprise hydrophobicizing powders consisting essentially of

A) pyrogenic silica or precipitated silica having a BET surface area of at least 50 $m^2/g$ as support material and
B) a hydrophobicizing component which is liquid at 10°C and comprises

B1) organosilicon compound and, if desired
B2) solvent and/or
B3) water and emulsifier,

with the proviso that the powders contain from 5 to 80% by weight of organosilicon compound, based on the total weight of the powder,

**characterized in that** the organosilicon compound (B1) is selected from the group consisting of

(B1.1) $C_1$-$C_{20}$-alkyl-$C_1$-$C_6$-alkoxysilanes,
(B1.2) organosiloxanes containing groups selected from among hydrocarbon, hydroxyl, $C_1$-$C_6$-alkoxy and aminoalkyl groups and
(B1.3) alkali metal siliconates.

**2.**   Building compositions according to Claim 1, wherein the organosiloxanes (B1.2) are built up of units of the formula (I)

$$R_v Si(OH)_x (OR^1)_y R^2{}_z O_{\frac{4-v-x-y-z}{2}} \qquad (I)$$

where

R    is a monovalent, unsubstituted or halogensubstituted, SiC-bonded $C_1$-$C_{20}$-hydrocarbon radical,
$R^1$   is a hydrogen atom or a monovalent $C_1$-$C_6$-alkyl radical,
R2    is a monovalent, unsubstituted or halogensubstituted, SiC-bonded aminoalkyl radical having from 1 to 30 carbon atoms,

v      is 0, 1, 2 or 3, on average from 0.3 to 2.0,
x      is 0 or 1, on average from 0.0 to 1.0,
y      is 0, 1, 2 or 3, on average from 0.0 to 1.5 and
z      is 0, 1, 2 or 3, on average from 0.0 to 0.8,

with the proviso that the organosiloxanes (B1.2) have at least one unit of the formula (I) in which the sum of x, y and z is at least 1.

3. Building compositions according to Claim 2 in which the organosiloxanes (B1.2) present are organosiloxanes (B1.2.1) which are liquid at 10°C, wherein

v    has an average value of from 0.3 to 1.5,
x    has an average value of from 0.0 to 0.2,
y    has an average value of from 0.4 to 1.2 and
z    is 0.

4. Building compositions according to Claim 2 in which the organosiloxanes (B1.2) present are organosiloxanes (B1.2.2) which are solid at 10°C, wherein v, x, y and z are as defined in Claim 5.

5. Building compositions according to Claim 2 in which the organosiloxanes (B1.2) present are organosiloxanes (B1.2.3) in which

v    is on average from 1.6 to 2.0, in particular from 1.9 to 2.0,
x    is on average from 0.01 to 1.0,
y    is on average from 0.0 to 0.2 and
z    is 0.

6. Building compositions according to Claim 2 in which the organosiloxanes (B1.2) present are organosiloxanes (B1.2.4) in which

v    has an average value of from 0.3 to 1.9, in particular from 0.9 to 1.8,
x    has an average value of from 0.0 to 0.1,
y    has an average value of from 0.0 to 1.0, in particular from 0.0 to 0.3 and
z    has an average value of from 0.05 to 1.0, in particular from 0.2 to 0.8.

7. Building compositions according to any of Claims 1 to 6 which are coating compositions or mineral building mixtures for producing mineral building components.

**Revendications**

1. Masses de matériau de construction qui comprennent des poudres rendant hydrophobes contenant essentiellement

A) de la silice produite par pyrogénation ou de la silice précipitée avec une surface BET d'au moins 50m$^2$/g comme matériau support et
B) un composant rendant hydrophobe qui est liquide à 10°C et contient

    B1) un composé d'organosilicium et, le cas échéant
    B2) un solvant et/ou
    B3) de l'eau et un émulsifiant

à condition que les poudres contiennent de 5 à 80% en poids de composé d'organosilicium, sur la base du poids total de la poudre,
**caractérisée en ce que** le composé d'organosilicium (B1) soit sélectionné parmi des

    (B1.1) (alkyle en $C_1$-$C_{20}$) (alcoxy en $C_1$-$C_6$)silanes

(B1.2) organosiloxanes qui présentent des groupements qui sont sélectionnés parmi des groupements hydrocarbonés, hydroxyle, alcoxy en $C_1$-$C_6$ et aminoalkyle
(B1.3) siliconates de métal alcalin.

**2.** Masses de matériau de construction selon la revendication 1, dans lesquelles les organosiloxanes (B1.2) sont constitués d'unités de formule générale (I)

$$R_v Si(OH)_x (OR^1)_y R^2{}_z O_{\frac{4-v-x-y-z}{2}}$$

dans laquelle

R signifie un radical hydrocarboné en $C_1$-$C_{20}$ lié par SiC monovalent, le cas échéant substitué par un halogène,
$R^1$ signifie un atome d'hydrogène ou un radical monovalent alkyle en $C_1$-$C_6$,
$R^2$ signifie un radical aminoalkyle lié par SiC, monovalent, le cas échéant substitué par un halogène ayant 1 à 30 atomes de carbone,
v signifie les valeurs 0, 1, 2 ou 3, en moyenne 0,3 à 2,0,
x signifie les valeurs 0 ou 1, en moyenne 0,0 à 1,0 et
y signifie les valeurs 0,1,2 ou 3, en moyenne 0,0 à 1,5 et
z signifie les valeurs 0, 1, 2 ou 3, en moyenne de 0,0 à 0,8, à condition que les organosiloxanes (B1.2) aient au moins une unité de la formule générale (I) dans laquelle la somme de x, y et z est au moins 1 ;

**3.** Masses de matériau de construction selon la revendication 2, qui contiennent en tant qu'organosiloxanes (B1.2) des organosiloxanes (B1.2.1) qui sont liquides à 10°C,

v présentant une valeur moyenne de 0,3 à 1,5 ,
x présentant une valeur moyenne de 0,0 à 0,2 ,
y présentant une valeur moyenne de 0,4 à 1,2 et
z présentant la valeur O.

**4.** Masses de matériau de construction selon la revendication 2, qui présentent en tant qu'organosiloxanes (B1.2) des organosiloxanes (B1.2.2) qui sont à l'état solide à 10°C, v, x, y et z présentant les significations indiquées dans la revendication 5.

**5.** Masses de matériau de construction selon la revendication 2, qui contiennent en tant qu'organosiloxanes (B1.2) des organosiloxanes (B1.2.3), dans lesquelles

v est en moyenne 1,6 à 2,0, en particulier 1,9 à 2,0,
x est en moyenne 0,01 à 1,0,
y est en moyenne 0,0 à 0,2 et
z présente la valeur 0.

**6.** Masses de matériau de construction selon la revendication 2, qui contiennent en tant qu'organosiloxanes (B1.2) des organosiloxanes (B1.2.4), dans lesquelles

v présente une valeur moyenne de 0,3 à 1,9, en particulier de 0,9 à 1,8,
x a une valeur moyenne de 0,0 à 0,1,
y a une valeur moyenne de 0,0 à 1,0, en particulier de 0,0 à 0,3 et
z a une valeur moyenne de 0,05 à 1,0 en particulier de 0,2 à 0,8.

**7.** Masses de matériau de construction selon l'une quelconque des revendications 1 à 6, les masses de matériau de construction étant des masses de revêtement ou des mélanges minéraux de matériaux de construction pour la production de composants de construction minéraux.